# EUROPEAN PATENT APPLICATION

(11) **EP 2 765 571 A1**
(43) Date of publication of application: **13.08.2014**
(21) Application number: 13154622.8
(22) Date of filing: 08.02.2013
(51) Int. Cl.: G09G 5/00, G06F 13/40, H04N 7/00

(54) **Micro USB3.0 connector for simultaneous video, power and data transmission (NGC-e)**

(71) Applicant: BlackBerry Limited, Waterloo, ON N2K 0A7 (CA)
(72) Inventor: The designation of the inventor has not yet been filed
(74) Representative: Bryn-Jacobsen, Caelia

(57) **Abstract**

A connector for coupling a first electronic device to a second electronic device in accordance with a USB3.0 standard. The connector comprises a plurality of contacts configured to communicate audio/video over a USB2.0 portion of the connector, and data over a USB3.0 portion of the connector. The plurality of contacts are configured with a first group of contacts arranged in accordance with the USB2.0 standard and a second group of contacts arranged in accordance with the USB3.0 standard, the first group of contacts configured to transport audio/video over the MYDP standard.

## Description

### TECHNICAL FIELD

The present disclosure relates generally to communication links between electronic devices, and more particularly, to simultaneous high speed data, video and power transmission.

### BACKGROUND

Universal Serial Bus (USB)3.0 is a wired communication standard that transmits signals over conductive cables. The USB3.0 standard supports two main modes of operation: (i) SuperSpeed mode (5Gb/s); and (ii) USB2.0 backward compatible mode. USB 3.0 is the second major revision of the Universal Serial Bus (USB) standard for computer connectivity. The prior standard -- USB 2.0 -- added a new transfer speed called High Speed (HS - 480 Mbit/s) to the earlier speeds (Low Speed (LS) - 1.5 Mbit/s and Full Speed (FS) - 12 Mbit/s).

USB 3.0 provides a higher transfer speed, greater bandwidth by virtue of a plurality of unidirectional paths, enhanced power management, improved bus utilization through asynchronous notification, and support to rotating media via Stream Protocol.

Current USB3.0 Standard - A and - B pin arrangements are shown as follows:

**USB A Pinout, Cable Assembly**

| Pin | Signal Name | Description |
|---|---|---|
| 1 | VBUS | Red |
| 2 | D- | White |
| 3 | D+ | Green |
| 4 | GND | Black |
| 5 | StdA_SSRX- | Blue |
| 6 | StdA_SSRX+ | Yellow |
| 7 | GND_DRAIN | GROUND |
| 8 | StdA_SSTX- | Purple |
| 9 | StdA_SSTX+ | Orange |
| Shell | Shield | Connector Shell |

**USB B Pinout, Cable Assembly**

| Pin | Signal Name | Description |
|---|---|---|
| 1 | VBUS | Red |
| 2 | D- | White |
| 3 | D+ | Green |
| 4 | GND | Black |
| 5 | StdA_SSTX- | Blue |
| 6 | StdA_SSTX+ | Yellow |
| 7 | GND_DRAIN | GROUND |
| 8 | StdA_SSRX- | Purple |
| 9 | StdA_SSRX+ | Orange |
| Shell | Shield | Connector Shell |

### M

In view of the advantages conferred by USB3.0, it would be beneficial to provide a new USB3.0 connector configuration that advantageously improves simultaneous highspeed video, data and power transfer.

### DESCRIPTION OF DRAWINGS

FIG. 1 is schematic of a system in accordance with the present disclosure;

FIG. 2 a schematic of an exemplary interface;

FIGS. 3A and 3B depict an illustrative embodiment of a USB3.0 connector arrangement for supporting the MYDP standard in accordance with an aspect of the disclosure; and

FIGS. 4A and 4B illustrate further details of the USB3.0 connector arrangement of FIGS. 3A and 3B linking a pair of electronic devices.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

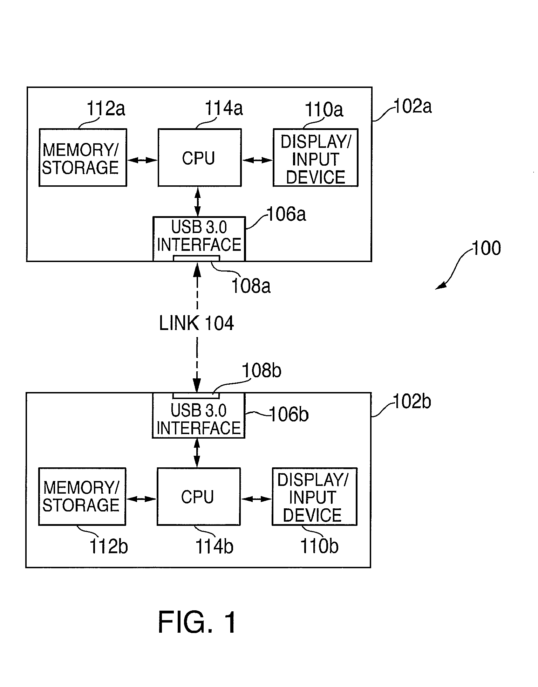

FIG. 1 depicts an exemplary system 100 utilizing a wired connection via a short-range link. For example, the system 100 may communicate short-range wireless data between devices using a wired standard. In general, wired standards may include Universal Serial Bus (USB) (e.g., USB 3.0), Peripheral Component Interconnect Express (PCIe), High-Definition Multimedia Interface (HDMI), Mobility DisplayPort (MYDP), Digital Visual Interface (DVI), or other standards that define hardware (e.g., cables, connectors) and protocols for communicating signals through a wired connection (e.g., serial connection, optical fiber connection). As described, the system 100 communicates through a short-range link using a USB 3.0 SuperSpeed communication link.

As for a high-level description, the system 100 includes devices 102a and 102b that wirelessly communicate through a short-range link 104 using signals formatted in accordance with the wired standard. As illustrated, the devices 102a, 102b include a wired communication interface 106a, 106b that respectively couples to a USB3.0 connector 108a, 108b. Based on detecting an electrical connection, the wired communication interface 106b may establish a communication link with the wired communication interface 106a in accordance with the wired standard.

The device 102 is configured to receive and transmit communications within the system 100. The device 102 includes, but is not limited to tablet computers, cradles, docks, cellular phones, data phones, pagers, portable computers, SIP phones, smart phones, personal data assistants (PDAs), digital cameras, MP3 players, camcorders, one or more processors within these or other devices, or any other suitable processing devices capable of communicating information. In some implementations, the device 102 may be based on a cellular radio technology. For example, the device 102 may be a tablet computer operable to wirelessly connect with an external or unsecured network. In another example, one or both devices 102a, 102b may include an input device 110a, 110b, such as a keypad, touch screen, mouse, or other device that can accept information, and an output device that conveys information associated with the system 100. In the illustrated implementation the devices 102a, 102b comprise memory/storage 112a, 112b, a Central Processing Unit (CPU) 114a, 114b, and others components coupled by a suitable architecture as known in the art. The wired communication interface 106a, 106b may include any hardware, software, firmware, or a combination thereof for communicating electrical signals in accordance with a wired standard. In accordance with an aspect of the disclosure, the wired communication interface 106a, 106b is configured to communicate electrical signals in accordance with the USB 3.0 protocol. In some implementations, the wired communication interface 106a, 106b may detect an electrical connection and establish a communication link in response to at least the connection. For example, the wired communication interface 106a, 106b may detect a load indicating a connected device and execute a detection sequence in response to at least the load.

While the devices 102a and 102b are illustrated as including a display, the devices 102a and 102b may not include a display or include an interactive display. For example, the display may be a Graphical User Interface (GUI) operable to allow the user of the device 102 to interface with at least a portion of the system 100 for any suitable purpose, such as short-range communication formatted in accordance with a wired standard. Generally, the GUI provides the particular user with an efficient and user-friendly presentation of data provided by or communicated within the system 100 and/or also an efficient and user-friendly process for the interacting with users. The GUI may comprise a plurality of customizable frames or views having interactive fields, pull-down lists, and/or buttons operated by the user. The term graphical user interface may be used in the singular or in the plural to describe one or more graphical user interfaces and each of the displays of a particular graphical user interface. The GUI can include any graphical user interface, such as a generic web browser or touch screen that processes information in the system 100 and presents the results to the user.

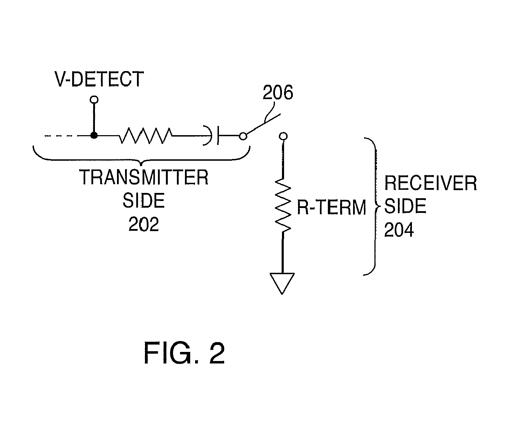

FIG. 2 illustrates an exemplary interface 200 that detects connection of two devices. In general, USB 3.0 SuperSpeed is a very high speed interface (5Gb/s) that includes set procedures for establishing a link. To invoke this link establishment protocol, the USB 3.0 hosts and devices may detect that an appropriate device has been connected. This process is called the RX Detect Sequence in the USB 3.0 specification. RX Detection includes the transmitter on each device observing an exponential voltage function created by the charging of a capacitor through resistance, where the RC circuit is completed by the termination resistance of the USB 3.0 receiver at the far end of the unidirectional serial line. As illustrated, the interface 200 includes a transmitter side 202, a receiver side 204, and a mechanical connection 206. The mechanical connection 206 can represent the absence of the USB 3.0 cable connecting the transmitter and receiver (open) or the presence of the cable connecting the transmitter and receiver (closed). When the transmitter side 202 and the receive side 204 are connected by a mechanical connection 206 that is USB 3.0 compliant cable, the RC circuit is completed (switch closed) such that the RX Detect Sequence is executed.

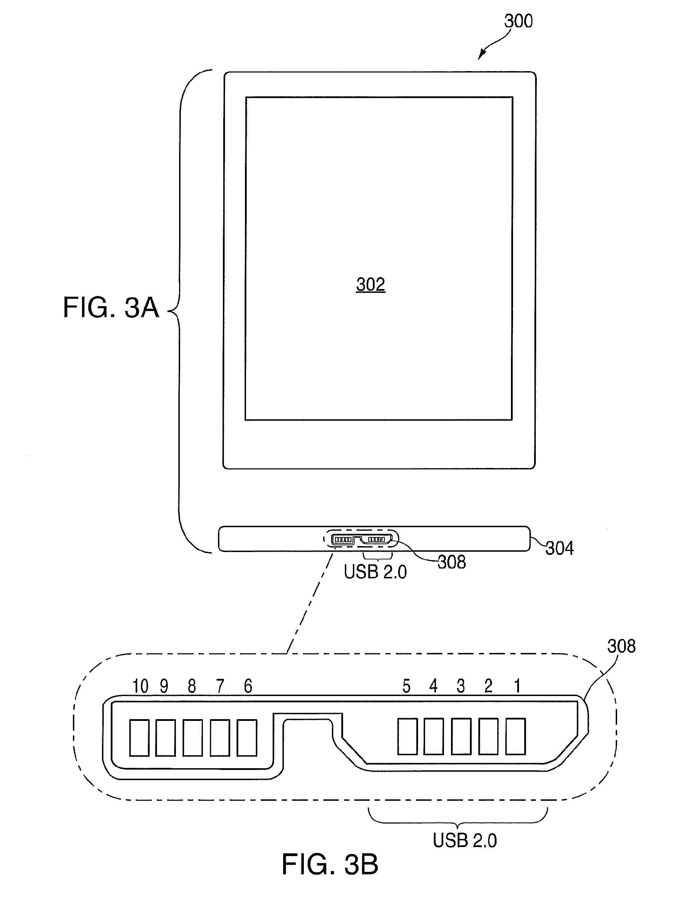

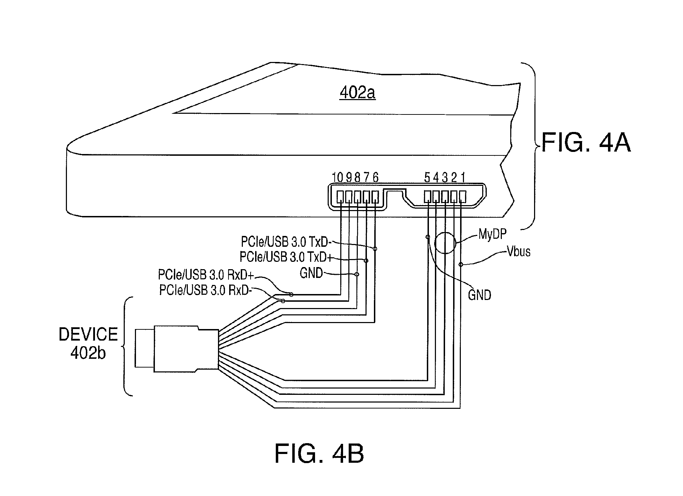

FIGS. 3A and 3B illustrate an illustrative system 300 for transmitting signals formatted in accordance with the USB3.0 standard. As illustrated, the system 300 includes a tablet computer 302a and a side view 304a of the computer 302a. Referring to FIG. 3A, the side view 304a includes electrical a USB3.0 connector 308a. The USB3.0 connector 308a transmits power and data with a second device 302b formatted in accordance with the USB3.0 SuperSpeed standard. FIGS. 4A and 4B show the particular connector arrangement linking a pair of devices 402a, 402b. In accordance with an aspect of the disclosure, the connector 308a incorporates a pin configuration as set forth in the last column of the following table:

| | **Curent Nmicro USB3.0** | | **BB USB 3** |
|---|---|---|---|
| **Pin Number** | **USB2.0** | **USB3.0** | |
| **1** | Vbus | | Power |
| **2** | D- | | MyDP |
| **3** | D+ | | MyDP |
| **4** | OTG ID | | MyDP |
| **5** | GND | | GND |
| **6** | | Tx D- | PCle or **USB3.0** Tx D- |
| **7** | | TxD+ | PCle or **USB3.0** Tx D+ |
| **8** | | GND | GND |
| **9** | | Rx D- | PCle or **USB3.0** Rx D- |
| **10** | | Rx D+ | PCle or **USB3.0** Rx D+ |

The second column shows a side-by-side comparison of the standard pin arrangement for USB2.0 and USB3.0. In the accordance with the present disclosure, pins 2 and 3, carrying data lines D- and D+ respectively, are utilized in conjunction with pin 4 (OTG ID, backchannel information) to provide MYDP functionality. The MYDP standard is a digital AV interconnect for mobile source devices capable of audio/video stream sourcing. MYDP may be mapped to a connector with as few as five pins, with such configuration being prevalent in the majority of consumer electronic devices.

Based on DisplayPort, MYDP enables the transport of 1080p 60Hz audio/video (AV) streaming and offers the interoperability between a MYDP source device and a DisplayPort sink device compliant with DisplayPort, either via an MYDP-to-DP passive cable adaptor with no active components or an active lane-count/link rate converter. A MYDP source device can interoperate with a non-DisplayPort sink device via a MYDP active protocol converter to other display interfaces such as HDMI and VGA. Furthermore, MYDP enables battery charging of a MYDP source device using power from a downstream device such as the DP_PWR output of a DisplayPort sink device provided through a DP_PWR wire within a captive cable of the cable adaptor when a MYDP source device is connected to a DisplayPort sink device via the MYDP-to-DP cable adaptor.

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A connector for coupling a first electronic device to a second electronic device in accordance with a USB3.0 standard, comprising:
a plurality of contacts configured to communicate audio/video over a USB2.0 portion of the connector, and data over a USB3.0 portion of the connector.

2. The connector of claim 1, wherein the plurality of contacts comprises a first group of contacts arranged in accordance with the USB2.0 standard and a second group of contacts arranged in accordance with the USB3.0 standard, the first group of contacts configured to transport audio/video over the MYDP standard.

3. The connector of claim 2, wherein the second group of contacts are compatible with PCle and USB3.0 Tx and Rx.

4. The connector of claim 3, wherein the first group of contacts 1 - 5 include contacts 2-4 configured to transport video over MYDP, and the second group of contacts 6 - 10 include contacts 6 and 7 configured to transmit Tx D-, Tx D+ PCle or USB3.0 and contacts 9 and 10 configured to receive Rx D-, Rx D+ PCle or USB3.0.

5. A connector for coupling a first electronic device to a second electronic device in accordance with a USB3.0 standard, comprising:
a plurality of contacts configured to communicate video over a USB2.0 portion of the connector, and data over a USB3.0 portion of the connector, the plurality of contacts comprising a first group of contacts arranged in accordance with the USB2.0 standard and a second group of contacts arranged in accordance with the USB3.0 standard, the first group of contacts including contacts 2-4 configured to transport audio/video over the MYDP standard.
